# EUROPÄISCHE PATENTSCHRIFT

(11) **EP 2 496 440 B1**
(45) Veröffentlichungstag und Bekanntmachung des Hinweises auf die Patenterteilung: **03.01.2018**
(21) Anmeldenummer: 10768396.3
(22) Anmeldetag: 22.09.2010
(51) Int. Cl.: B60N 2/44, B60N 2/62

(54) **SITZKISSENNEIGUNGSEINSTELLUNG**
SEAT CUSHION INCLINATION ADJUSTMENT SYSTEM
RÉGLAGE DE L'INCLINAISON D'UN COUSSIN DE SIÈGE

(30) Priorität: 05.11.2009 DE 102009052111
(43) Veröffentlichungstag der Anmeldung: 12.09.2012
(73) Patentinhaber: Adient Luxembourg Holding S.à r.l., 2453 Luxembourg (LU)
(72) Erfinder: ARRENBERG, Jürgen, 42113 Wuppertal (DE)
(74) Vertreter: Wolff, Felix
(86) Internationale Anmeldenummer: PCT/EP2010/005791
(87) Internationale Veröffentlichungsnummer: WO 2011/054416

(56) Entgegenhaltungen:
- EP-A1- 2 085 262
- EP-A2- 0 882 619
- EP-A2- 2 006 149
- WO-A1-2007/147636
- DE-A1- 2 736 550
- DE-A1- 4 423 957
- DE-A1- 19 512 012
- DE-A1-102006 050 614
- DE-A1-102008 046 000
- DE-U1-202006 001 969
- US-A- 4 334 709

## Beschreibung

Die vorliegende Erfindung betrifft ein Sitzteil eines Kraftfahrzeugsitzes mit einem Basisteil, der eine Querabstützung aufweist und mit einem verstellbaren Teil.

Derartige Sitzteile sind aus dem Stand der Technik bekannt und werden beispielsweise dazu eingesetzt die Oberschenkelunterstützung des Sitzinsassen optimalen an dessen Physionomie anzupassen. Der verstellbare Teil ist dabei am vorderen Ende des Sitzteils angeordnet und drehbar, schwenkbar und/oder translatorisch bewegbar vorgesehen. Die aus dem Stand der Technik bekannten Sitzversteller sind jedoch vergleichsweise aufwändig aufgebaut und deshalb sowohl vergleichsweise teuer als auch vergleichsweise schwer.

Das Dokument EP 2 006 149 A beschreibt einen Kraftfahrzeugsitz entsprechend dem Oberbegriff des Anspruchs 1.

Es war deshalb die Aufgabe der vorliegenden Erfindung ein Sitzteil zur Verfügung zu stellen, das die Nachteile des Standes der Technik nicht aufweist.

Gelöst wird die Aufgabe mit einem Sitzteil eines Kraftfahrzeugsitzes, der die Merkmale des Anspruchs 1 aufweist. Die vorliegende Erfindung betrifft den Sitzteil eines Kraftfahrzeugsitzes, der aus diesem Sitzteil und einer Rückenlehne besteht. Die Rückenlehne ist in der Regel drehbar an dem Sitzteil vorgesehen, so dass der Neigungswinkel zwischen Sitzteil und Rückenlehne einstellbar ist. Der Kraftfahrzeugsitz kann eine oder mehreren Personen Platz bieten. Es kann sich folglich auch um eine Sitzbank handeln.

Der erfindungsgemäße Sitzteil ist vorzugsweise in dem Kraftfahrzeug längst verschieblich und besonders bevorzugt höhenverstellbar vorgesehen, um den Kraftfahrzeugsitz optimal an die jeweilige Physionomie des Sitzinsassen einstellen zu können.

Erfindungsgemäß weist das Sitzteil ein Basisteil mit einer Querabstützung auf. Diese Querabstützung ist vorzugsweise Teil des Rahmens und/oder Teil der Höhenverstellung des Sitzes. Des Weiteren weist das erfindungsgemäße Sitzteil einen verstellbaren Teil auf. Dieser verstellbare Teil ist besonders bevorzugt im Oberschenkelbereich des Sitzinsassen angeordnet und kann besonders bevorzugt relativ zum Basisteil rotatorisch und/oder translatorisch bewegt oder verschwenkt werden, um optimal an die Physionomie des jeweiligen Insassen angepasst zu werden.

### BESTÄTIGUNGSKOPIE

Erfindungsgemäß ist nun vorgesehen, dass bei Sitzbelastung sowie beim Verstellen des verstellbaren Teils die Kraft immer mittig auf die Querabstützung gerichtet ist. Folglich ist sichergestellt, dass keine Abstützmomente insbesondere von der Querabstützung aufgenommen werden müssen.

Gemäß einem weiteren erfindungsgemäßen Gegenstand oder einem bevorzugten Gegenstand der vorliegenden Erfindung weist diese einen Verstellmechanismus, insbesondere einen Antrieb, auf, der in jeder Stellung des verstellbaren Teils relativ vom Basisteil ausschließlich druckbelastet und zugbelastet ist.

Diese erfindungsgemäße oder bevorzugte Ausführungsform der vorliegenden Erfindung mit entsprechender Kinematik hat den Vorteil, dass die Verstellung keinen Totpunkt aufweist.

Vorzugsweise erfolgt die Verstellung durch einen Linearantrieb. Besonders bevorzugt ist dieser Linearantrieb als ein Mutter-Spindel-Antrieb, wobei die Mutter oder die Spindel rotatorisch angetrieben werden können und sich dann die Mutter relativ zur ortfesten Spindel oder die Spindel relativ zur ortsfesten Mutter bewegt.

Weiterhin bevorzugt handelt es sich bei dem Linearantrieb um eine Kolben-Zylinder-Anordnung mit Kraftunterstützung, z.B. eine verriegelbare Gasdruckfeder.

Der Linearantrieb kann auch beispielsweise ein motorischer Antrieb sein.

Vorzugsweise ist der Linearantrieb drehbar an der schweren Abstützung gelagert.

Weiterhin bevorzugt weist das Sitzteil einen Höhenverstellmechanismus auf, wobei besonders bevorzugt die Querabstützung Teil des Höhenverstellmechanismus ist.

Vorzugsweise ist der Verstellantrieb, insbesondere der Linearantrieb bezogen auf die Z-Richtung, d. h. in Fahrtrichtung des Fahrzeuges sitzmittig angeordnet.

Gemäß einer weiteren Ausführungsform weist das Sitzteil ein Kraftspeicher auf, der die Verstellung des verstellbaren Teils insbesondere gegen die Gravitationskraft unterstützt. Ein derartiger Kraftspeicher kann beispielsweise eine Feder sein.

Im Folgenden werden die Erfindungen anhand der Figuren 1 bis 5 erläutert. Diese Erläuterungen gelten für alle Gegenstände der vorliegenden Erfindung gleichermaßen. Die Erläuterungen schränken den allgemeinen Erfindungsgedanken nicht ein.
- **Figur 1**: zeigt die Abstützung des verstellbaren Teils an der Querabstützung.
- **Figur 2**: zeigt den als Spindel-Mutter-Anordnung sowie als Zylinder-Kolben-Anordnung vorgesehenen Antrieb der Verstellung.
- **Figur 3**: zeigt noch einmal den Spindel-Mutter-Antrieb.
- **Figur 4**: zeigt die Ausführungsform gemäß den Figuren 1 bis 3 jedoch mit einer Kolben-Zylinder-Anordnung.
- **Figur 5**: zeigt die Ausführungsform gemäß den Figuren 1 bis 3 jedoch mit einem motorischen Antrieb.

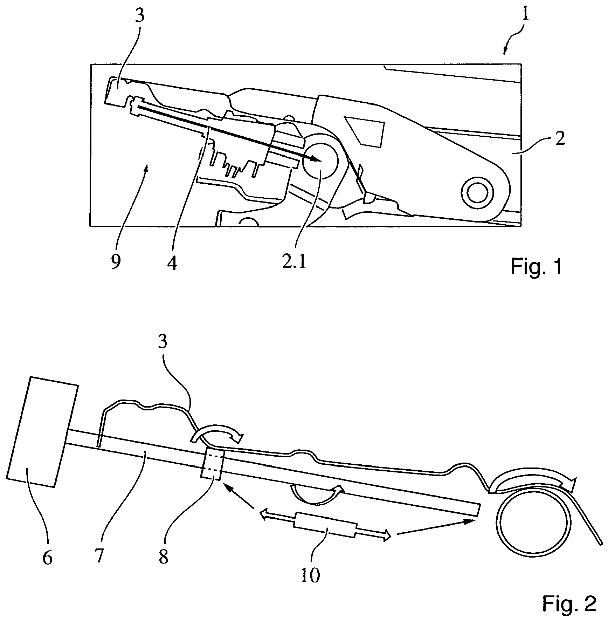

In Figur 1 ist das Sitzteil 1 dargestellt, das einen Basisteil 2 und einen daran drehbar und/oder längs verschieblich vorgesehenen verstellbaren Teil 3 aufweist. Der verstellbare Teil 3 ist in dem der Rückenlehne abgewandten vorderen Bereich des Sitzteils angeordnet und dient der Unterstützung der Oberschenkel des Sitzinsassen und ist auf die jeweilige Physionomie des Sitzinsassen einstellbar. Erfindungsgemäß ist nun vorgesehen, dass die beim Verstellen des Teils 3 auftretende Kraft immer mittig auf die Querabstützung gerichtet ist. Mittig im Sinne der vorliegenden Erfindung bedeutet, dass die Kraft auf den geometrischen Mittelpunkt beziehungsweise auf die geometrische Mittelachse gerichtet ist, was in dem vorliegenden Fall durch Pfeil 4 dargestellt ist. Dadurch müssen von der Konstruktion insbesondere von Querabstützung 2.1 keinerlei Drehmomente abgefangen werden. Die Querabstützung 2.1 ist in dem vorliegenden Fall Teil des Höhenverstellmechanismus. Diese bevorzugte Ausführungsform der vorliegenden Erfindung hat den Vorteil, dass dieselben Teile für eine Höhenverstellung aber auch für die Verstellung der Schenkelabstützung genutzt werden können. Figur 1 ist auch der weitere Gegenstand der vorliegenden Erfindung entnehmbar, nämlich dass in jeder Stellung des Teils 3 relativ zu dem Basisteil 2 lediglich Druckkräfte und/oder Zugkräfte auf dem Verstellmechanismus insbesondere den Antrieb, hier den Linearantrieb 9 ,wirken. Gemäß der Kinematik dargestellt in Figur 1 wird das Sitzteil 3 im Punkt 5 am Gestell 2 drehbar und/oder längsverschieblich gelagert. Dadurch ist sichergestellt, dass das erfindungsgemäße Sitzteil kein Totpunkt aufweist. Der Antrieb der Verstellung ist mit seinem einen Ende drehbar, jedoch längsfixiert an der Querabstützung 2.1 vorgesehen. Das andere Ende ist drehbar und/oder längsverschieblich an dem verstellbaren Teil 3 vorgesehen.

Figur 2 zeigt eine bevorzugte Ausführungsform des Antriebs der Verstellung. In dem vorliegenden Fall ist der Antrieb ein Linearantrieb und weist eine Spindel 7 auf, auf der eine Mutter 8 angeordnet ist, die fest, insbesondere drehfest mit dem verstellbaren Teil verbunden ist. Mittels der Handhabe 6 ist die Spindel drehbar vorgesehen, wobei sich bei deren Drehung die Mutter 8 entlang der Längsachse der Spindel 7 verstellt. Die Mutter 8 ist an dem verstellbaren Teil 3 vorgesehen, so dass sich beim Verstellen der Mutter 8 auch der verstellbare Teil 3 um den Punkt 5 bewegt. Das Spindelende wird in dem vorliegenden Fall in einem Widerlager (nicht dargestellt) drehbar mittig am Rohrende befestigt. Das Spindelende ist in dem Widerlager druck- und zugfest gelagert. Der Fachmann versteht, dass es auch möglich ist, die Mutter zu drehen und die gesamte Spindel oder die Mutter auf der Spindel axial zu verschieben. Des Weiteren versteht der Fachmann, dass der manuelle Antrieb mit Handhabe auch durch einen motorischen Antrieb ersetzt werden kann. Figur 2 ist noch eine weitere Alternative des Linearantriebs dargestellt. Wie Figur 2 entnommen werden kann, kann es sich bei dem Linearantrieb um eine Kolbenzylinderanordnung 10 handeln.

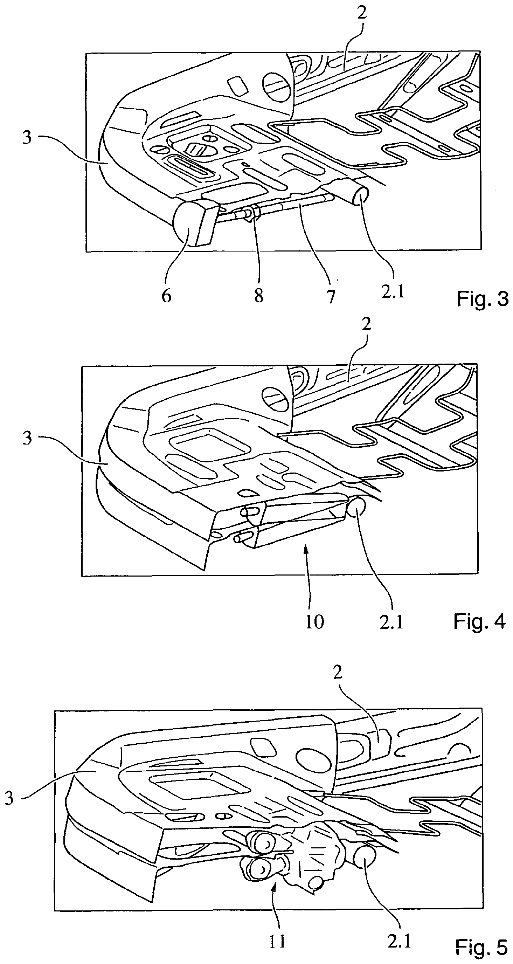

In den Figuren 3 bis 5 sind drei alternative Ausführungsformen des Linearantriebs dargestellt.

Figur 3 zeigt noch einmal die Spindel-Mutter-Anordnung.

Figur 4 zeigt den Antrieb des verstellbaren Teils mittels einer Kolben-Zylinder-Anordnung.

Figur 5 zeigt einen motorischen Antrieb des verstellbaren Teils.

Allen Ausführungsformen der Antriebe ist gemeinsam, dass sie jeweils mittig an dem Querrohr 2.1 angreifen. Des Weiteren ist all diesen Ausführungsformen gemeinsam, dass die resultierenden auf das Rohr 2.1 wirkenden Kräfte jeweils Druckkräfte und/oder Zugkräfte sind und dass der Antrieb in jeder Stellung des verstellbaren Teils druck- und/oder zugbelastet ist.

### Bezugszeichenliste:

- 1: Sitzteil
- 2: Basisteil des Sitzteils
- 2.1: Querabstützung, Querrohr
- 3: verstellbarer Teil des Sitzteils
- 4: Kraftrichtung
- 5: Drehpunkt
- 6: Handhabe
- 7: Spindel
- 8: Mutter
- 9: Linearantrieb
- 10: Kolben/Zylinder-Anordnung
- 11: motorischer Antrieb

## Patentansprüche

1. Sitzteil (1) eines Kraftfahrzeugsitzes mit einem Basisteil (2) und einem daran drehbar und/oder längs verschieblich vorgesehenen verstellbaren Teil (3), wobei der Sitzteil (1) eine Querabstützung (2.1) aufweist und der relativ zu dem Basisteil (2) verstellbare Teil (3) eine im einer Rückenlehne abgewandten vorderen Bereich des Sitzteils angeordnete Unterstützung der Oberschenkel darstellt, wobei der Sitzteil (1) einen Höhenverstellmechanismus aufweist, wobei die sowohl bei Sitzbelastung als auch beim Verstellen des Teils (3) auftretende Kraft (4) immer auf den geometrischen Mittelpunkt und/oder auf die geometrische Mittelachse der Querabstützung (2.1) gerichtet ist und die Querabstützung (2.1) darüber hinaus Teil des Höhenverstellmechanismus des Sitzteils (1) ist, wobei ein Verstellantrieb mit seinem einen Ende drehbar, jedoch längsfixiert an der Querabstützung (2.1) vorgesehen ist und das andere Ende des Verstellantriebs drehbar und/oder längsverschieblich an dem verstellbaren Teil (3) vorgesehen ist, **dadurch gekennzeichnet, dass** die Querabstützung (2.1) Teil eines Rahmens ist.

2. Sitzteil nach Anspruch 1, **dadurch gekennzeichnet, dass** er einen Verstellmechanismus (7, 10, 11) aufweist, der in jeder Stellung des Teils (3) relativ zur Querabstützung (2.1) druck- und/oder zugbelastet ist.

3. Sitzteil nach einem der voranstehenden Ansprüche, **dadurch gekennzeichnet, dass** die Verstellung durch einen Linearantrieb (6-8, 10, 11) erfolgt.

4. Sitzteil nach Anspruch 3, **dadurch gekennzeichnet, dass** der Linearantrieb eine Mutter-Spindel-Anordnung (6-8) ist.

5. Sitzteil nach Anspruch 3, **dadurch gekennzeichnet, dass** der Linearantrieb eine Kolben-Zylinder-Anordnung (10) ist.

6. Sitzteil nach Anspruch 3, **dadurch gekennzeichnet, dass** der Linearantrieb ein motorischer Antrieb ist.

7. Sitzteil nach einem der Ansprüche 2-6, **dadurch gekennzeichnet, dass** der Linearantrieb drehbar an der Querabstützung (2.1) gelagert ist.

8. Sitzteil nach einem der voranstehenden Ansprüchen, **dadurch gekennzeichnet, dass** ein Kraftspeicher vorgesehen ist, der die längsverschiebliche Verstellung des Teils (3) unterstützt.

## Claims

1. Seat part (1) of a motor vehicle seat, having a base part (2) and having an adjustable part (3) which is provided in a rotatable and/or longitudinally displaceable manner thereon, wherein the seat part (1) has a transverse supporting element (2.1), and the part (3) which is adjustable relative to the base part (2) constitutes an upper-leg support, arranged in the front region, which is averted from a backrest, of the seat part, wherein the seat part (1) comprises a height adjustment mechanism, wherein the force (4) that arises both when the seat is loaded and during adjustment of the part (3) is always directed toward the geometric centre point and/or toward the geometric centre axis of the transverse supporting element (2.1), and the transverse supporting element (2.1) is furthermore part of the height adjustment mechanism of the seat part (1), wherein an adjustment drive is provided to be rotatable but longitudinally fixed with one end thereof on the transverse supporting element (2.1), and the other end of the adjustment drive is provided in a rotatable and/or longitudinally displaceable manner on the adjustable part (3), **characterized in that** the transverse supporting element (2.1) is part of a frame.

2. Seat part according to Claim 1, **characterized in that** it comprises an adjustment mechanism (7, 10, 11) which, in each position of the part (3), is loaded by compressive and/or tensile force relative to the transverse supporting element (2.1).

3. Seat part according to one of the preceding claims, **characterized in that** the adjustment is carried out by means of a linear drive (6-8, 10, 11).

4. Seat part according to Claim 3, **characterized in that** the linear drive is a nut-spindle arrangement (6-8).

5. Seat part according to Claim 3, **characterized in that** the linear drive is a piston-cylinder arrangement (10).

6. Seat part according to Claim 3, **characterized in that** the linear drive is a motorized drive.

7. Seat part according to one of Claims 2-6, **characterized in that** the linear drive is rotatably mounted on the transverse supporting element (2.1).

8. Seat part according to one of the preceding claims, **characterized in that** an energy accumulator is provided which assists the longitudinally displaceable adjustment of the part (3).

## Revendications

1. Partie de siège (1) d'un siège de véhicule automobile comprenant une partie de base (2) et une partie (3) déplaçable prévue de manière à pouvoir tourner sur celle-ci et/ou à pouvoir être déplacée le long de celle-ci, la partie de siège (1) présentant un support transversal (2.1) et la partie (3) déplaçable par rapport à la partie de base (2) constituant un support des cuisses disposé dans la région avant de la partie de siège opposée au dossier, la partie de siège (1) présentant un mécanisme de réglage en hauteur, la force (4) s'exerçant en cas de sollicitation du siège ainsi qu'en cas de déplacement de la partie (3) étant toujours orientée vers le centre géométrique et/ou vers l'axe médian géométrique du support transversal (2.1) et le support transversal (2.1) faisant en outre partie du mécanisme de réglage en hauteur de la partie de siège (1), un entraînement de réglage étant prévu avec l'une de ses extrémités de manière à pouvoir tourner, mais toutefois de manière fixée longitudinalement, sur le support transversal (2.1) et l'autre extrémité de l'entraînement de réglage étant prévue de manière à pouvoir tourner et/ou de manière à pouvoir être déplacée longitudinalement sur la partie déplaçable (3), **caractérisée en ce que** le support transversal (2.1) fait partie d'un cadre.

2. Partie de siège selon la revendication 1, **caractérisée en ce qu'**elle présente un mécanisme de réglage (7, 10, 11), qui est sollicité en pression et/ou en traction dans chaque position de la partie (3) par rapport au support transversal (2.1).

3. Partie de siège selon l'une quelconque des revendications précédentes, **caractérisée en ce que** le déplacement s'effectue par un entraînement linéaire (6-8, 10, 11).

4. Partie de siège selon la revendication 3, **caractérisée en ce que** l'entraînement linéaire est un agencement broche-écrou (6-8).

5. Partie de siège selon la revendication 3, **caractérisée en ce que** l'entraînement linéaire est un agencement cylindre-piston (10).

6. Partie de siège selon la revendication 3, **caractérisée en ce que** l'entraînement linéaire est un entraînement à moteur.

7. Partie de siège selon l'une quelconque des revendications 2 à 6, **caractérisée en ce que** l'entraînement linéaire est supporté de manière rotative sur le support transversal (2.1).

8. Partie de siège selon l'une quelconque des revendications précédentes, **caractérisée en ce qu'**il est prévu un accumulateur de force qui supporte le mouvement de déplacement longitudinal de la partie (3).
